# EUROPÄISCHE PATENTSCHRIFT

(11) **EP 0 909 899 B1**
(45) Veröffentlichungstag und Bekanntmachung des Hinweises auf die Patenterteilung: **31.07.2002**
(21) Anmeldenummer: 98119031.7
(22) Anmeldetag: 08.10.1998
(51) Int. Cl.: F16C 43/02, F16C 35/02, F16C 9/04

(54) **Verfahren zur Montage eines Gleitlagers**
Method for mounting a sliding-contact bearing
Procédé de montage d'un palier à glissement

(30) Priorität: 17.10.1997 DE 19746070
(43) Veröffentlichungstag der Anmeldung: 21.04.1999
(73) Patentinhaber: Volkswagen Aktiengesellschaft, 38436 Wolfsburg (DE)
(72) Erfinder: Westphal, Christian, Dr., 38527 Meine (DE); Reissner, Hagen, 38108 Braunschweig (DE); Klügel, Martin, Dipl.-Phys., 38162 Cremlingen (DE)

(56) Entgegenhaltungen:
- JP-A- 62 028 523
- PATENT ABSTRACTS OF JAPAN vol. 1996, no. 09, 30. September 1996 (1996-09-30) & JP 08 128435 A (TOYOTA MOTOR CORP), 21. Mai 1996 (1996-05-21)

## Beschreibung

Die Erfindung betrifft ein Verfahren zur Montage eines Gleitlagers mit einem Lagergehäuse mit wenigstens einer Lagerbohrung und einer Welle, welche in einer geteilten Gleitlagerschale mit Gleitlager-Halbschalen in der Lagerbohrung gelagert ist, gemäß dem Oberbegriff des Anspruchs 1.

Wellen bei in der Wellenebene geteilten Lagergehäusen werden üblicherweise in geteilten Gleitlager-Halbschalen gelagert. Speziell bei Kurbelwellen-Hauptlagerungen, beispielsweise in Kraftfahrzeugbrennkraftmaschinen, ist aufgrund von Kröpfungen diese Anordnung vorteilhaft, wenn nicht alternativ sogenannte "gebaute" Kurbelwellen eingesetzt werden.

Mit "Lagerspiel" wird hier eine Differenz zwischen einem Gehäusedurchmesser abzüglich einer Wanddicke der beiden Lagerschalen und einem Zapfendurchmesser bezeichnet. Dabei bezeichnen "Gehäusedurchmesser" senkrecht zu einer Trennfuge gemessene Durchmesser einer Gehäusebohrung für das Gleitlager ohne eingebaute Lagerschalen, "Wanddicke" die in einem Winkel von 90 Grad zur Trennfuge an einem Lagerdeckel gemessene Dicke und "Zapfendurchmesser" ein Durchmesser der fertig bearbeiteten Welle, gemessen an einer Stelle, an der sich voraussichtlich der größte Durchmesser ergibt. Im übrigen wird zur Begriffsdefinition auf die Norm ISO 4378-1 und den Entwurf für die Norm ISO 13778 verwiesen.

Das Lagerspiel darf eine Kleinstspielgrenze nicht unterschreiten und soll oberhalb dieser Grenze im fertig montierten Zustand eine möglichst kleine Streuung aufweisen, um akustisch nachteilige Stoßanregungen durch zu große Spiele gering zu halten.

Die Streuung des Spiels nach dem Zusammenbau der Bauteile ist durch eine Summe von Bauteiltoleranzen bedingt, wie beispielsweise Durchmesser der Lagerbohrung des Lagergehäuses, Dicke der oberen und unteren Gleitlager-Halbschalen und Durchmesser der Welle. Bei der Montage ergeben sich zusätzliche Einflüsse auf das Lagerspiel durch eine Schwankung der Aufweitung der Lagerbohrung aufgrund Gleitlager-Halbschalen-Überstand oben und unten, Umfangslänge der Lagerbohrung und Istmaß einer Stahlrückendicke oben und unten. Diese Parameter haben eine systematische Auswirkung auf das Lagerspiel bei unterschiedlichen Elastizitätsmodulen des Lagergehäuses, welches beispielsweise aus Aluminium oder Grauguß (GG) gefertigt ist.

Es ist bekannt, hinsichtlich des Lagerspieles entweder besonders enge Bauteiltoleranzen, beispielsweise für das Lagergehäuse, umzusetzen oder, wie aus der JP 62-28523 bekannt, Einzelmessungen für alle Bauteile durchzuführen und sogenannte "Größenklassen" zu bilden. Mit entsprechenden Zuordnungsvorschriften für die Montage wird durch geeignete Zuordnung von Lagerschalen eine Reduzierung der rechnerischen Spielschwankung erreicht. Dieses Verfahren kann jedoch in keiner Weise den oben erwähnten Montageeinfluß berücksichtigen.

So ist es beispielsweise aus dem Entwurf für die Norm ISO 13778, Methode 3 bekannt, Gleitlager-Halbschalen in verschiedene Klassen einzuteilen, welche jeweils einem bestimmten Toleranzbereich entsprechen. Je nach Klassifizierung werden die Bauteile mit einer Farbmarkierung versehen. Bei vorgegebenen Bauteilen für Zapfen und Gehäuse werden gemäß deren Klassifizierung aus einer Zuordnungsmatrix zwei Gleitlager-Halbschalen mit jeweiliger Klassifizierung derart gewählt, daß ein Lagerspielbereich der fertigen Lager möglichst eng ist. Durch eine Vermessung von Gehäuse und Lager auf µm und entsprechende Auswahl von zwei Gleitlager-Halbschalen aus sechs Klassen gemäß einer Feinmatrix soll bei einer Toleranz der Lagerklassen von 6 µm eine Spieltoleranz von 18 µm erreicht werden, d.h. der Lagerspielbereich beträgt 0,026 bis 0,044 mm.

Bei dieser Vorgehensweise wird die Sicherheit des Fertigungsprozesses der einzelnen Bauteile ersetzt durch eine Sicherheit von Einzelmessungen, ohne daß Mitteilungen für statistisch abgesicherte Einzelwerte bei der Einzelteilkennzeichnung herangezogen werden können. Die sich hieraus ergebende Problematik zeigt folgende Beispielrechnung:

Bei einem Spiel von 0,024 mm betragen die Durchmesser von der Lagerbohrung 60,024 mm und von der Welle 55,000 mm. Die Dicken der Gleitlager-Halbschalen betragen oben 2,500 mm und unten 2,500 mm. Bei üblichen Produktionsbedingungen hinsichtlich der Taktzeit und der Einzelmessungen beträgt ein sehr geringer Meßfehler beispielsweise 0,01%. Für die Komponentenmessung addiert sich der Meßfehler für das vorgenannte konkrete Zahlenbeispiel zu +/- 0,012 mm. Dies sind jedoch bereits 50% des Spieles selbst. Durch Einteilung der gemessenen Bauteile in "Größenklassen" wird die vorhandene Meßwertinformation weiter in der Aussagefähigkeit reduziert. Derartige Klassierungssysteme mit "Größenklassen" sind daher für die Umsetzung kleiner Spiele und kleiner Spielschwankungen nicht geeignet.

Ferner ist es aus JP 81-28435 bekannt, zur Verringerung der Streuung des Spiels einer Kurbelwelle in einem Lager eine Quetschhöhe derart zu setzen, daß sich die Deformation aufgrund Expansion eines Lagerteils gemäß einer Dicke des Lagermetalls entsprechend anpaßt.

Der vorliegenden Erfindung liegt daher die Aufgabe zugrunde, eine Verfahren der obengenannten Art zur Verfügung zu stellen, wobei die obengenannten Nachteile überwunden werden und prozeßsicher die Einzelmessungen der Bauteile derart in ein spieloptimiertes Klassierungskonzept eingebracht werden, daß das Spiel und dessen Schwankungen verringert sind.

Diese Aufgabe wird erfindungsgemäß durch ein Verfahren der o.g. Art mit den in Anspruch 1 angegebenen Verfahrensschritten gelöst. Vorteilhafte Ausgestaltungen der Erfindung sind in den abhängigen Ansprüchen angegeben.

Dazu sind erfindungsgemäß folgende Schritte vorgesehen:
(a) Festlegen einer zulässigen, nicht zu unterschreitenden Kleinstspielgrenze, einer zulässigen, nicht zu überschreitenden Größtspielgrenze sowie Festlegen eines Wertes für die Meßunsicherheit der Einzelmessungen,
(b) Bestimmen der Istmaße von vorgefertigten Wellen und Gleitlagerschale,
(c) Bestimmen der sich bei Paarung der Lagerbohrung mit der Welle einstellenden Abweichung von einem sich statistisch einstellenden und durch die Kleinstspielgrenze und Größtspielgrenze bestimmten mittleren Lagerspieles,
(d) Kompensieren von im wesentlichen der halben bestimmten Abweichung durch Zuordnung einer aus dem Schritt (b) vorgehaltenen Gleitlager-Halbschale, wobei die Kompensation derart erfolgt, daß sich das einstellende Lagerspiel (S) in einem Wertebereich bewegt, welcher um mindestens den Wert einer Meßunsicherheit oberhalb der Kleinstspielgrenze (44) und unterhalb der Größtspielgrenze (46) liegt,
(e) Kompensieren der verbliebenen Abweichung durch Zuordnung einer weiteren aus dem Schritt (b) vorgehaltenen Gleitlager-Halbschale wobei die Kompensation derart erfolgt, daß sich das einstellende Lagerspiel (S) in einem Wertebereich bewegt, welcher um mindestens den Wert einer Meßunsicherheit oberhalb der Kleinstspielgrenze (44) und unterhalb der Größtspielgrenze (46) liegt.

Dies hat den Vorteil, daß das Lagerspiel sehr genau vorbestimmbar ist und derart gefertigte Baugruppen aus Lagergehäuse, Gleitlager-Halbschalen und Welle eine geringe Streuung bezüglich des Lagerspiels aufweisen.

Nach dem erfindungsgemäßen Verfahren erfolgt die Zuordnung der vermessenen Bauteile derart zueinander, daß selbst ein niedrigster sich einstellender Wert für das Lagerspiel um wenigstens die effektive Meßunsicherheit der Bauteileinzelmessungen von der vorbestimmten Kleinstspielgrenze bzw. der Größtspielgrenze beabstandet liegt.

Die Summe der Meßunsicherheiten aus den Einzelmessungen werden somit in ihrer Summe der Spielgrenze in der Art eines "Sicherheitsabstandes" zugeordnet und müssen nicht bereits bei den Ergebnissen von Schritt (b) und deren Verwendung in Schritt (c) berücksichtigt werden. Somit kann in Schritt (d) und (e) die Bauteilezuordnung rein und ausschließlich nach den Istmaßen bzw. einer Bauteilekennzeichnung gemäß der bestimmten Abweichungen erfolgen. Dies hat den zusätzlichen Vorteil, daß die Fertigung von den Zeichnungstoleranzen unabhängig ist.

Für eine noch genauere Vorbestimmung des Lagerspiels und eine noch geringere Streuung des Lagerspiels von rechnerisch beispielsweise 2 µm wird in vorteilhafter Weise in Schritt (b) zusätzlich das Istmaß der Lagerbohrung bestimmt. Hierbei ist bevorzugt ein Istmaß des Lagergehäuses ein senkrecht zu einer Trennfuge gemessener Durchmesser der Lagerbohrung für das Gleitlager ohne eingebaute Lagerschalen. Bei diesem Vorgehen können in vorteilhafter Weise die Bauteile beispielsweise auf 1 µm genau gepaart werden.

Für eine einfache und schnelle Handhabung der Bauteile und eine einfache und schnelle Zusammenführung von zuzuordnenden Bauteilen werden in besonders bevorzugter Weise die Werkstücke entsprechend ihrer Abweichung vom Sollmaß gekennzeichnet.

In einer bevorzugten Ausführungsform der Erfindung ist das Lagergehäuse ein Zylinderkurbelgehäuse und die Welle eine Kurbelwelle.

Zweckmäßigerweise ist ein Istmaß der Wellen ein Durchmesser der fertig bearbeiteten Welle, gemessen an einer Stelle, an der sich voraussichtlich der größte Durchmesser ergibt und ein Istmaß der Gleitlager-Halbschalen eine in einem Winkel von 90 Grad zur Trennfuge, insbesondere an einem Lagerdeckel, gemessene Dicke.

Gemäß Patentanspruch 2 ist es bevorzugt vorgesehen, das in der Zuordnungsvorschrift gemäß Schritt (d) und (e) zusätzlich das in Schritt (a) bestimmte Istmaß eines Durchmessers der Lagerbohrung berücksichtigt wird, wodurch dieser Durchmesser D als Umfangsinformation U zusätzlich ausgewertet wird, denn ein größerer Durchmesser erhöht mit dU = pi * dD den Umfang U der Lagerbohrung und reduziert entsprechend die Aufweitung durch einen real verkürzten Überstand der Gleitlager-Halbschalen.

In einer besonders bevorzugten Ausführungsform erfolgt in Schritt (b) die Bestimmung der Istmaße in 2 µm breiten Schritten, insbesondere in 1 µm breiten Schritten.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: ein Gleitlager in Schnittansicht,
- Fig. 2: eine Bauteilklassierung in Toleranzbändern gemäß einer ersten bevorzugten Ausführungsform der Erfindung mit Kennzeichnung eines Lagergehäuses.
- Fig. 3: eine Bauteilklassierung in Toleranzbändern gemäß einer zweiten bevorzugten Ausführungsform der Erfindung ohne Kennzeichnung des Lagergehäuses,
- Fig. 4 u. 5: eine tabellarische Aufstellung der Zuordnung von Bauteilklassen zu Istmaßen,
- Fig. 6: eine statistische Häufigkeitsverteilung des Hauptlagerspiels mit einer 1 µm-Lagerschalenzuordnung,
- Fig. 7: eine statistische Häufigkeitsverteilung des Hauptlagerspiels mit einer 4 µm-Lagerschalenzuordnung,
- Fig. 8: eine statistische Häufigkeitsverteilung des Hauptlagerspiels mit einer 1 µm-Lagerschalenzuordnung und unklassiertem Lagergehäuse,
- Fig. 9: eine Bauteilklassierung in Toleranzbändern gemäß einer dritten bevorzugten Ausführungsform der Erfindung,
- Fig. 10: eine Bauteilklassierung in Toleranzbändern gemäß einer vierten bevorzugten Ausführungsform der Erfindung,
- Fig. 11: eine Zuordnungstabelle von Wellen zu Gleitlager-Halbschalen gemäß der vierten bevorzugten Ausführungsform der Erfindung,
- Fig. 12: eine Häufigkeitsverteilung des Lagerspiels gemäß der vierten bevorzugten Ausführungsform der Erfindung,
- Fig. 13: eine Bauteilklassierung in Toleranzbändern gemäß einer fünften bevorzugten Ausführungsform der Erfindung,
- Fig. 14: eine Zuordnungstabelle von Wellen zu Gleitlager-Halbschalen gemäß der fünften bevorzugten Ausführungsform der Erfindung und
- Fig. 15: eine Häufigkeitsverteilung des Lagerspiels gemäß der fünften bevorzugten Ausführungsform der Erfindung.

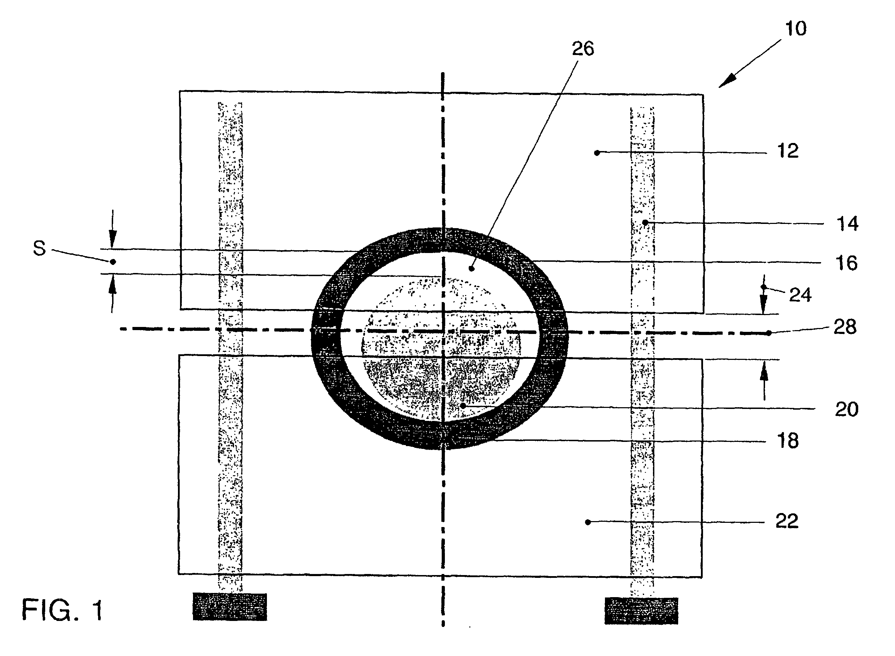

Das in Figur 1 schematisch dargestellte Gleitlager 10 umfaßt ein Lagergehäuse 12, Hauptlagerschrauben 14, eine obere Gleitlager-Halbschale 16, eine untere Gleitlager-Halbschale 18, ein Hauptwellenlager 20, eine Lagerdeckel 22 und eine von Lagerdeckel 22 und Lagergehäuse 12 gebildete Lagerbohrung 26, durch die eine Trennfuge 28 verläuft. Ein Abstand 24 von beispielsweise 30 bis 60 µm stellt sich zwischen Lagergehäuse 12 und Lagerdeckel 22 vor der Montage durch den Überstand der aufeinander liegenden Gleitlager-Halbschalen 16 und 18 ein. Beim Festziehen der Schrauben 14, beispielsweise mit einem Montagedrehmoment von (65 +/-6,5) Nm + (90 Grad +/- 9 Grad) schließt sich dieser Abstand 24, jedoch führen die aufeinander liegenden Gleitlager-Halbschalen 16 und 18 zu einer Aufweitung der Lagerbohrung 26. Aufgrund der verschiedenen einleitend erwähnten Parameter stellt sich ein Lagerspiel S ein.

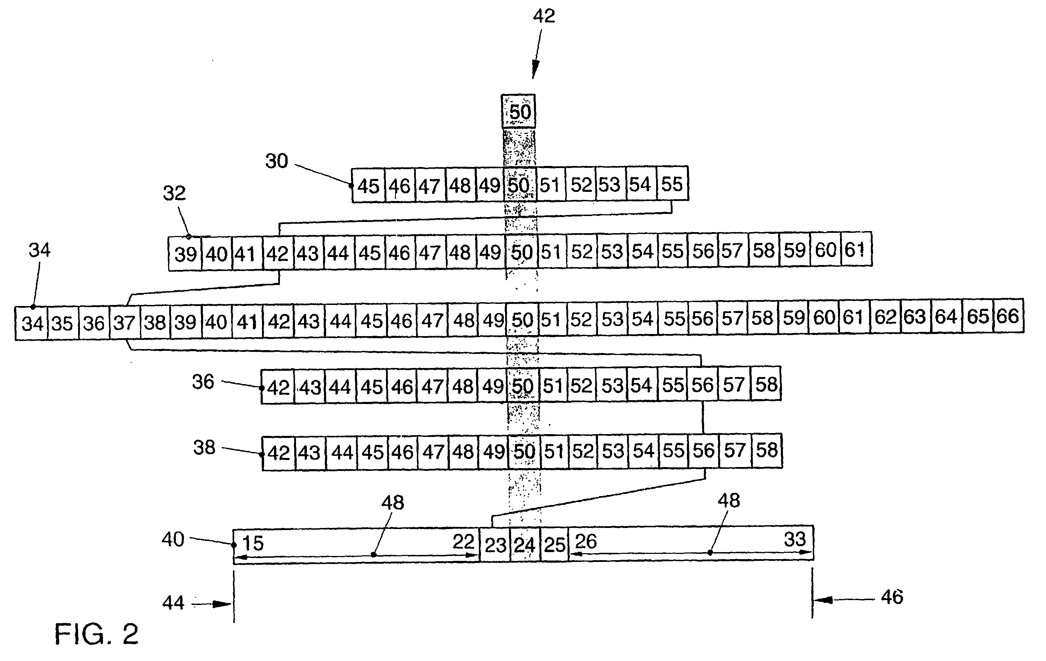

Die in Figur 2 illustrierte Klassierung des Lagerspiels S gemäß einer ersten bevorzugten Ausführungsform zeigt die erfindungsgemäße Darstellung der Klassierung in Toleranzbändern für das Lagergehäuse 30, die Welle 32, einer Spielklasse 34, obere Gleitlager-Halbschale 36, untere Gleitlager-Halbschale 38 und das absolute Lagerspiel 40. Mit 42 ist eine Toleranzmitte bezeichnet, welche sich statistisch als mittleres Lagerspiel zwischen einer Kleinstspielgrenze 44 und einer Größtspielgrenze 46 einstellt. Die Kleinstspielgrenze 44 ist im Prinzip frei wählbar, jedoch durch ein notwendiges Spaltmaß im Lager für den Aufbau eines hydrodynamischen Schmierfilmes, Rundheitsfehler der kurbelgehäuseseitigen Lagerbohrung und Empfindlichkeit auf Schmutzpartikel bestimmt. Die Kleinstspielgrenze 44 kann beispielsweise zwischen 10 µm und 20 µm betragen, als ein besonders geeigneter Wert in einem bevorzugten Bereich von 13 µm bis 17 µm hat sich 15 µm herausgestellt. Auf diesen Wert von 15 µm wurde sie im vorliegenden Beispiel festgelegt. Wird diese Grenze unterschritten, muß ggf. mit einem Klemmen des Lagers gerechnet werden. Die obere Grenze, dargestellt durch die Größtspielgrenze 46 wird derart festgelegt, daß die sich einstellende akustische Anregung durch dieses Lagerspiel gerade noch als tolerierbar erachtet wird. Die Größtspielgrenze 46 kann z. B. in einem Bereich von ca. 30 µm bis ca. 60 µm liegen, wobei im vorliegenden Fall gute Ergebnisse mit Werten zwischen 33 µm und 41 µm, vorzugsweise zwischen 33 µm und 35 µm, insbesondere 33 µm erzielt werden. Sie ist in diesem Beispiel auf 33 µm festgelegt. In Folge dessen stellt sich die Toleranzmitte 42 bei 24 µm ein.
Jede Erhöhung oder Erniedrigung der Zahlenwerte in den Toleranzbändern entspricht 1 µm des Istmaßes des entsprechenden Bauteiles. Das Toleranzband 30 des Lagergehäuses 12 hat eine Breite von ±5 µm, das Toleranzband 32 der Welle hat eine Breite von ±11 µm, das Toleranzband 34 der sich in Folge der möglichen Kombinationen aus Lagergehäuse und Welle einstellenden Spielklasse hat eine Breite von ±16 µm und die Toleranzbänder 36 und 38 von oberer und unterer Gleitlager- Halbschale haben eine Breite von jeweils ±8 µm.

Zum Einordnen eines Bauteiles in das jeweilige Toleranzband 30 bis 38 wird mit jedem Bauteil eine Einzelmessung durchgeführt, wobei ein Istmaß des entsprechenden Bauteils festgestellt wird. Je nach Abstand der Istmaße von der Toleranzmitte 42 wird das Bauteil mehr oder weniger weit weg von dieser Toleranzmitte 42 eingeordnet. Durch entsprechende Zuordnung von Bauteilen aus verschiedenen Bereichen der Toleranzbänder ergibt sich durch die Kombination der Abweichungen von der Toleranzmitte 42 eine Kompensation mit entsprechendem, vorbestimmbarem rechnerischen Lagerspiel S. Dies ist zunächst deshalb nur rechnerisch, da bisher Meßunsicherheiten der Einzelmessungen der Bauteile noch nicht berücksichtigt sind. Auf diese wird weiter unten eingegangen.

Wenn nun beispielsweise ein Lagergehäuse 12 der Klassierung "55" und eine Welle der Klassierung "42" vorliegt, dann ergibt sich eine Spielklasse von 37, da beide Teile jeweils ein Fehlmaß von 5 µm bzw. 8 µm bezüglich der Toleranzmitte 42 haben. Die Spielklasse ist also 5 + 8 gleich 13 µm unterhalb der Toleranzmitte 42, was der Spielklasse 37 (50-13) entspricht.

Um nun dieses gesamte Untermaß von 13 µm zu kompensieren, ordnet man dieser Kombination aus Lagergehäuse und Welle beispielsweise Gleitlager-Halbschalen 16, 18 der Klassen "56" zu. Diese Halbschalen 16 und 18 haben ein Übermaß von jeweils 6 µm und gleichen in der Summe 12 µm aus. Im Ergebnis liegt das Lagerspiel S nun 1 µm unterhalb der Toleranzmitte, da das Untermaß von Lagergehäuse 12 und Welle nicht vollstandig ausgeglichen wird, und hat einen Wert von 23 µm. Hier sind jedoch, wie erwähnt, die Meßunsicherheiten der Einzelmessungen noch nicht berücksichtigt. Um zu verhindern, daß sich durch diese Meßunsicherheiten ein Lagerspiel S ergibt, welches unterhalb der zulässigen Kleinstspielgrenze 44 und oberhalb der zulässigen Größtspielgrenze 46 liegt, wird folgendermaßen vorgegangen:

Dem Toleranzband 40 des absoluten Lagerspiels S wird jeweils von der Kleinstspielgrenze 44 und der Größtspielgrenze 46 ein Sicherheitsabstand 48 von 8 µm zugeordnet. Dieser ergibt sich folgendermaßen:

Zur Berücksichtigung der Meßunsicherheiten bei der Einzelmessung der Bauteile werden die Meßfehler wie folgt abgeschätzt:

| | |
|---|---|
| Durchmesser Welle bzw. Kurbelwelle | 3 µm |
| Durchmesser Lagerbohrung bzw. Kurbelgehäuse | 3-4 µm |
| Dicke der oberen Gleitlager-Halbschale | 1,5 µm |
| Dicke der unteren Gleitlager-Halbschale | 1,5 µm |
| arithmetische Summe der Meßunsicherheiten | 10 µm |
| statistische Summe der Meßunsicherheiten | 5,5 µm |

Dies ergibt effektiv eine Meßunsicherheit der Einzelmessungen von ca. 8 µm. Diese wird dadurch berücksichtigt, daß dem minimal zulässigen Lagerspiel von beispielsweise 15 µm der effektive Meßunsicherheitswert von 8 µm hinzu addiert wird. Bei der Klassierung bzw. der Zuordnung dürfen dann rechnerisch ermittelte Kleinstspiele von in diesem Fall 22 um (15 µm + 8 µm) nicht unterschritten werden. Eine kleinstmögliche Lagerspielstreuung wird daher erfindungsgemäß durch folgende Maßnahmen erreicht:
Istkennzeichnung von Welle und optional von Lagergehäuse 12 in um, beispielsweise nur als ganze Zahl,
Bestimmen der erforderlichen Lagerschalendicke aus der Summe der jeweiligen Wellen- und Lagergehäuse-Abweichungswerte vom mittleren Lagerspiel,
Versehen der Gleitlager-Halbschalen 16, 18 mit Dickenangaben in µm und entsprechende Sortierung dieser.

Durch diese Maßnahmen läßt sich rechnerisch eine Gesamtstreubreite des Lagerspiels von ca. 2 um darstellen.

Durch entsprechende Zuordnung der Gleitlager-Halbschalen 16 und 18 zu entsprechenden Spielklassen 34 derart, daß nur Werte des Toleranzbandes 40 des absoluten Lagerspiels S von 23 µm bis 25 µm erreicht werden, ist sichergestellt, daß selbst im ungünstigsten Fall für die Meßunsicherheiten der Bereich von 15 µm bis 33 µm für das Lagerspiel S nicht verlassen wird.

Die einleitend genannten, weiteren systematischen Einflüsse auf das Lagerspiel S aufgrund von Aufweitungen der Lagerbohrung 26 bei der Montage lassen sich durch eine entsprechende Berücksichtigung bei der Zuordnung in Schritt (d) und (e) des erfindungsgemäßen Verfahrens ebenfalls kompensieren. Hierfür erfolgt beispielsweise eine der Istmaßänderung im Zusammenbau entsprechende Kennzeichnung auf dem Bauteil bzw. eine entsprechende Auswertung der vorhandenen Informationen (z.B. Istmaß Lagergehäuse 12 bzw. Lagerbohrung 26). Ein Überstand der oberen und/oder Gleitlager-Halbschalen 16, 18 von beispielsweise 30 µm führt zu einer Aufweitung der Lagerbohrung bei der Montage von ca. +3 µm und erfordert eine Kompensation von -3 µm. Jede Verminderung des Durchmessers der Lagerbohrung des Lagergehäuses um beispielsweise 10 µm verursacht eine Aufweitung der Lagerbohrung bei der Montage um ca. +3 µm und erfordert eine Kompensation von -3 µm. Ein Istmaß einer Stahlrückendicke der oberen und/oder unteren Gleitlager-Halbschale 16, 18 bedingt bei einem Grauguß beispielsweise eine Aufweitung von +1 µm und erfordert eine Kompensation von ca. -1 µm. In einer Weiterführung der Erfindung können bekannte Modellrechnungen in die Lagerschalen-Zuordnung einfließen, wenn einem Zuordnungsrechner die Istwertinformationen der Komponenten- bzw. Bauteile-Parameter zur Verfügung gestellt werden, beispielsweise über die vorerwähnte Kennzeichnung der Teile mit Istwertinformationen.

Wesentlich bei diesem erfindungsgemäßen Vorgehen ist folgendes: Die Welle, die Gleitlager-Halbschalen 16 und 18 und optional das Lagergehäuse 12 bzw. die Lagerbohrung 26 des Lagergehäuses 12 und des Lagerdeckels 22 werden mit Istwerten aus Einzelmessungen gekennzeichnet. Für die prozeßsichere Komponentenkennzeichnung wird die Meßunsicherheit vollständig ausgenutzt (arithmetischer Ansatz). Die Meßunsicherheit der Komponenten- bzw. Bauteilemessung (arithmetisch) wird statistisch in der Zuordnungsvorschrift berücksichtigt (vektorielle Addition). Die Zuordnungsvorschrift kann durch Vorgabe gleicher Dicken für die Gleitlager-Halbschalen 16 und 18 oben und unten sowohl auf Durchmesserkompensation als auch auf Einhaltung einer Lagergassenfluchl: optimal eingestellt werden, d.h. gleiche Kennzeichnung bei oberer und unterer Gleitlager-Halbschale 16, 18 am montierten Gleitlager 10. Der Durchmesser D des Gehäuses 12 bzw. der Lagerbohrung 26 wird ferner als Umfangsinformation bei der Auswahl der Gleitlager-Halbschalen 16 und 18 zusätzlich ausgewertet. Größere Durchmesser D erhöhen nämlich mit dU = pi * dD den Umfang U und reduzieren die oben erläuterte Aufweitung durch reale Verkürzung des Überstandes 24 der Gleitlager-Halbschalen 16 und 18. Durch eine zusätzliche Berücksichtigung der Werte für den Überstand 24 und ggf. von Stahlrückendicken bei der Istwertkennzeichnung kann nicht nur die "geometrische"' Spielschwankung, sondern insbesondere auch die betriebsrelevante Spielschwankung reduziert werden.

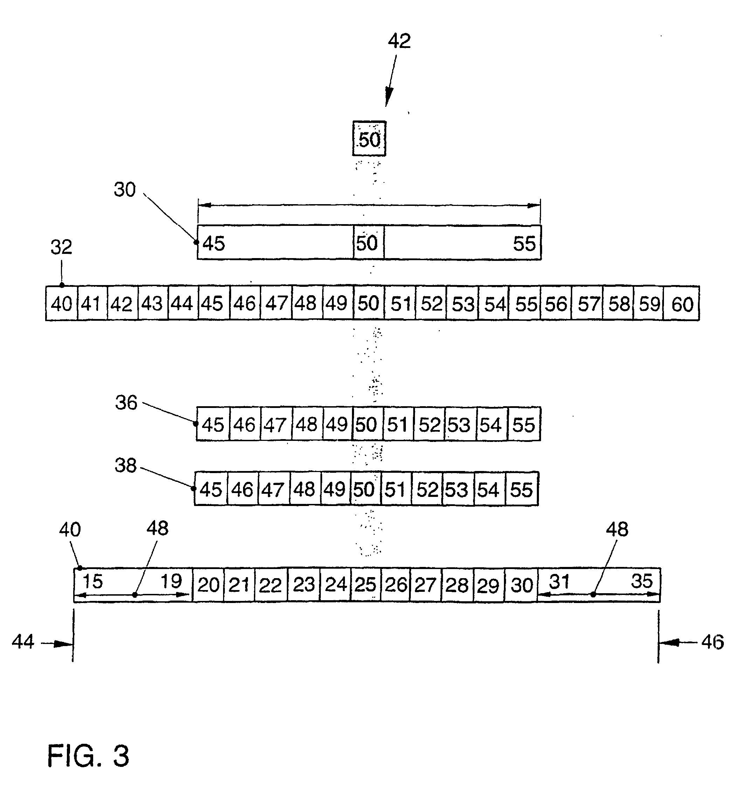

Figur 3 zeigt analog zu Figur 2 Toleranzbänder für eine Spielklassierung gemäß einer zweiten bevorzugten Ausführungsform. Die in den Toleranzbändern 32, 36 und 38 angegebenen Zahlen sind dimensionslose Klassen, während die im Toleranzband 40 angegebenen Zahlenwerte das Lagerspiel in µm angeben. Das absolute Lagerspiel bewegt sich zwischen der Kleinstspielgrenze 44 von 15 µm und der Größtspielgrenze 46 von 35 µm, die Toleranzmitte 42 ist daher auf 25 µm festgelegt, die oberhalb liegenden zugehörigen Klassen sind jeweils mit 50 bezeichnet. Im Unterschied zur ersten Ausführungsform gemäß Figur 2 erfolgt bei dem Toleranzband 30 des Lagergehäuses 12 eine Klassierung in lediglich eine Klasse, d.h. mit anderen Worten ist das Lagergehäuse 12 unklassiert. Das Toleranzband 34 für die Spielklasse entfällt und die Gleitlager-Halbschalen 16 und 18 werden aus den Toleranzbändern 36 und 38 gemäß der Klassierung der Welle im Toleranzband 32 zugeordnet. Die Meßunsicherheit 48 beträgt hier nur noch 5 µm und die Toleranzbänder 32, 36 und 38 haben eine Breite von jeweils ±10 µm, ±5 µm und ±5 µm. Ein Zahlenschritt entspricht wiederum 1 µm.

Bei diesem Lagerspielausgleich ohne Lagergehäusekennzeichnung ergibt sich eine günstigere Aufwand/Nutzen-Relation. Bei Lagergehäusen kann die Einzelmessung und -kennzeichnung entfallen, wenn enge Bauteiltoleranzen prozeßsicher eingehalten werden.Die Meßunsicherheit der Einzelmessung für das relativ große Nennmaß des Durchmessers D der Lagerbohrung 26 entfällt. Der Prozeßablauf erfolgt im wesentlichen analog zum ersten Ausführungsbeispiel von Figur 2. Der Umfangseinfluß des Durchmessers D des Gehäuses 12 bzw. der Lagerbohrung 26 wird weitgehend selbst kompensiert, wobei ein großer Durchmesser D der Lagerbohrung 26 zu einer relativ geringen Aufweitung und ein kleiner Durchmesser D der Lagerbohrung 26 zu einer relativ großen Aufweitung führt, da der Lagerbohrungsdurchmesser nicht durch Anpassung bei der Auswahl von Gleitlager-Halbschalen 16 und 18 ausgeglichen wird.

Bevorzugt werden bei der Auswahl der Gleitlager-Halbschalen 16 und 18 immer Gleitlager-Halbschalen 16, 18 aus der "gleichen Klasse" genommen. Die Meßunsicherheit bzw. der Sicherheitsabstand 48 bestimmt wesentlich die verbleibende Lagerspielschwankung und wird wie oben dargelegt bestimmt.

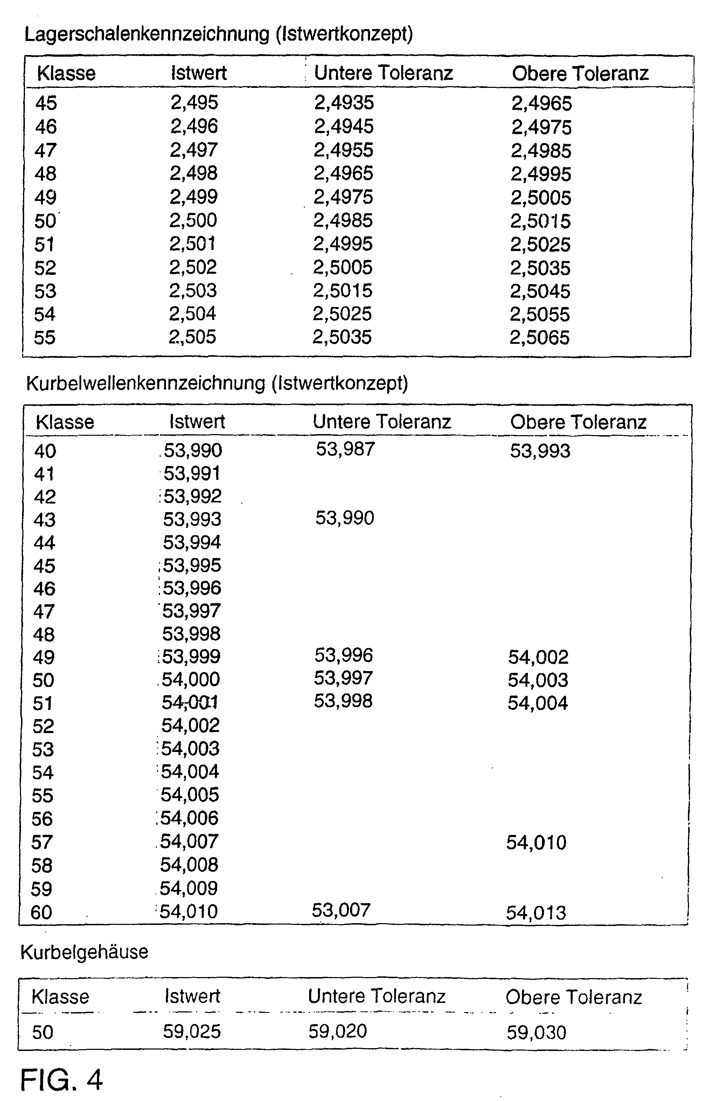

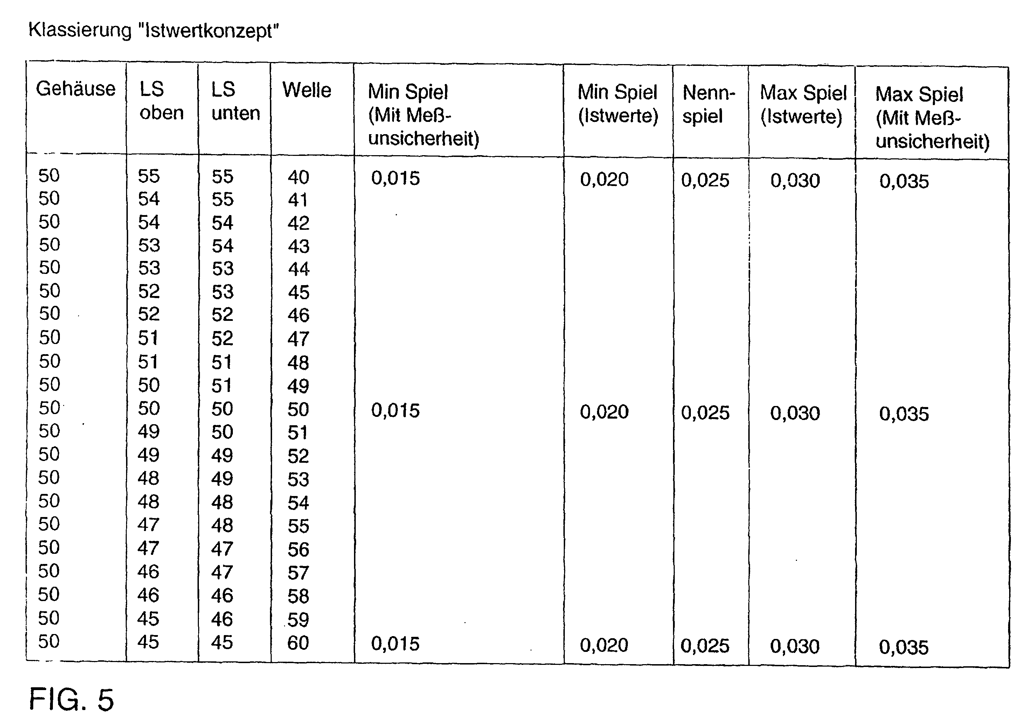

Die Figuren 4 und 5 zeigen beispielhaft für die Ausführungsform gemäß Figur 3 eine Zuordnung von Klassen der Toleranzbänder 30 bis 38 zu lstmaßen der Bauteile. Für eine Lagerschale mit beispielsweise 2,5 mm Dicke sind in Fig. 4 in der oberen Tabelle (Lagerschalenkennzeichnung) die unteren und oberen Toleranzlagen für insgesamt elf jeweils 1 µm breite Klassen 45 bis 55 angeben. Die untere bzw. obere Toleranzlage ergibt sich jeweils durch Addition bzw. Subtraktion von 1,5 µm Meßunsicherheit der jeweiligen Halbschale vom gemessenen Istwert.
In der darunterliegenden Tabelle ist in analoger Weise für eine Kurbelwelle mit einem Sollagerdurchmesser von 54,000 mm die untere bzw. obere Toleranzlage anhand einiger ausgewählter Zahlenwerte für eine Meßunsicherheit von 3 µm in insgesamt 21 Klassen 40 bis 60 angegeben. In Fig. 4 unten ist das unklassierte Kurbelgehäuse mit einer Meßunsicherheit von 5 um angenommen. Als Ergebnis dieses Istwertkonzeptes stellt sich eine Tabelle gemäß Fig. 5 ein, welche zeigt, daß jeder vorkommenden Kombination aus Welle und unklassiertem Kurbelgehäuse 12 Lagerschalen 16, 18 derartig zugeordnet werden können, daß das minimale Spiel von 15 µm bzw. das maximale Spiel von 35 µm nicht unter bzw. überschritten wird.

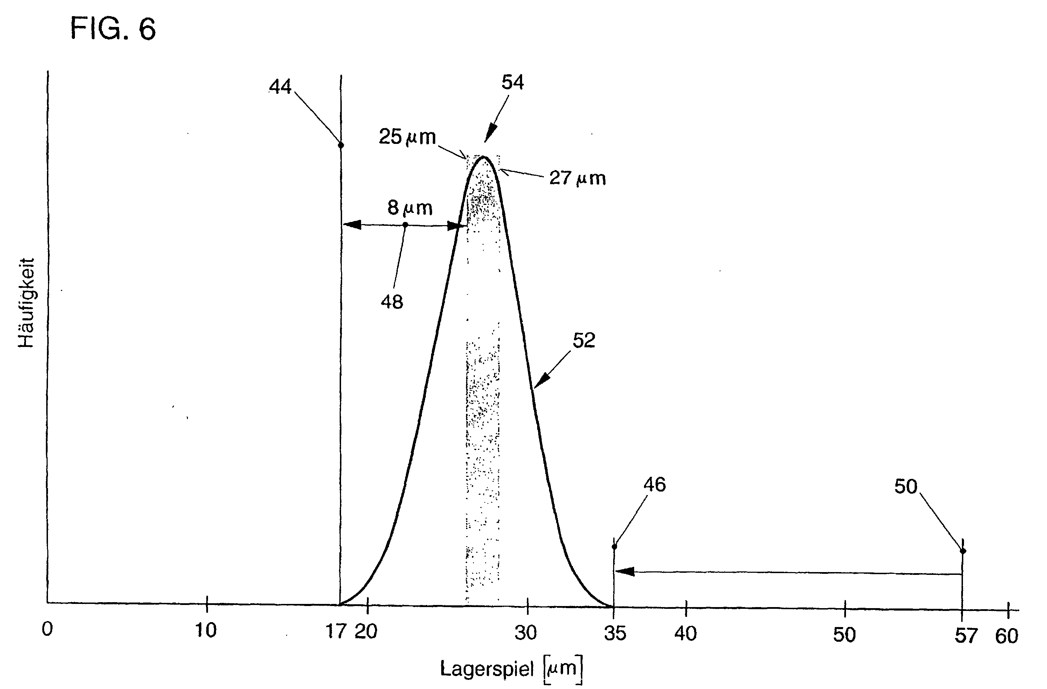

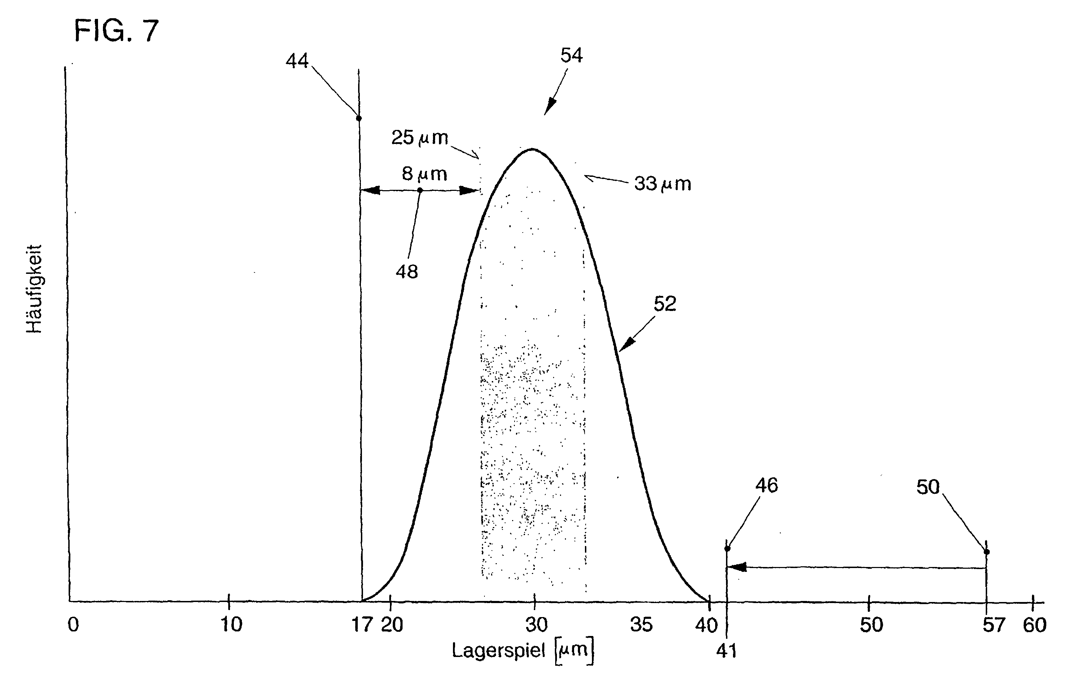

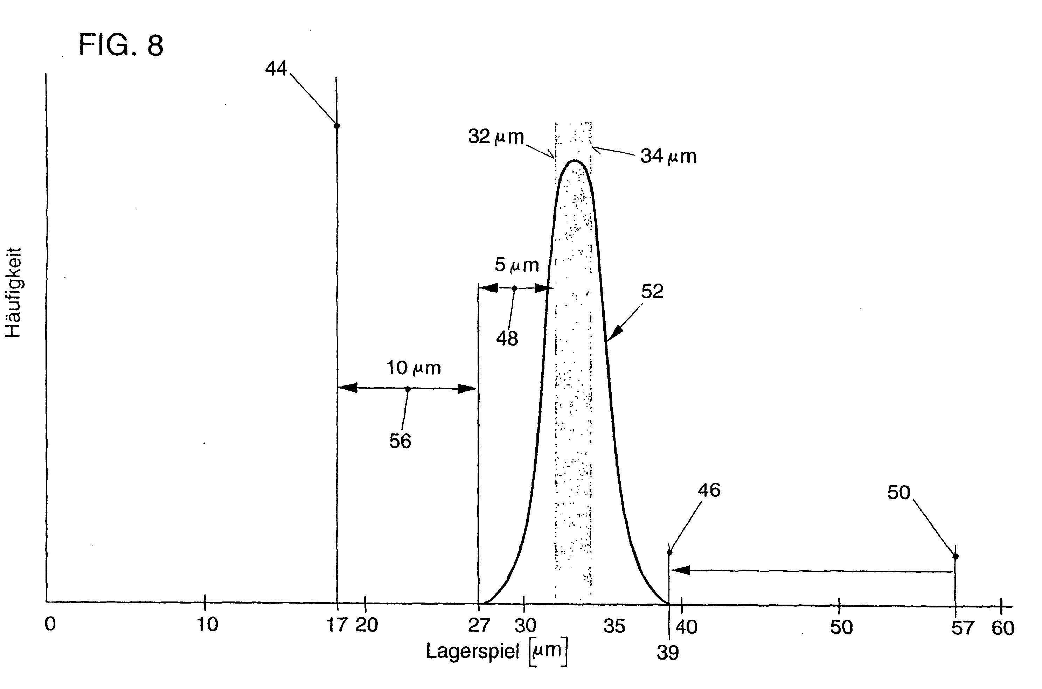

Die Figuren 6, 7 und 8 zeigen beispielhaft die statistischen Häufigkeitsverteilungen für das Lagerspiel S durch die Meßunsicherheiten der Einzelmessungen jeweils mit verschiedenen Zuordnungsrastern für die Gleitlager-Halbschalen 16, 18 (zwei mal 1 µm in Fig. 6 und zwei mal 4 µm in Fig. 7) und für das unklassierte Lagergehäuse 12 (Fig. 8). Das Lagerspiel ist in µm angegeben. Die Summe der Meßunsicherheiten 48 beträgt 8 µm bzw. 5 µm, das zugelassene Kleinstspiel 44 beträgt 17 µm, das zugelassenen Größtspiel 46 klassiert jeweils 35 µm, 41 µm bzw. 39 µm. Unklassiert würde sich jeweils ein Größtspiel 46 von 57 µm einstellen. Mit den Flanken 52 ist die statistische Berücksichtigung der Meßunsicherheiten angedeutet. Die Fläche unter der die Flanken 52 enthaltenden Kurve entspricht der Fläche des jeweils mittig liegenden Balkens.

Fig. 6 zeigt die Lagerspielverteilung 54 mit auf 1 µm genauer Zuordnung der Gleitlager-Halbschalen 16 und 18 in je 16 Klassen. Figur 7 zeigt beispielhaft die Lagerspielverteilung 54 mit auf 4 µm genauer Zuordnung der Gleitlager-Halbschalen 16 und 18 in 8 Klassen.
Unter der Annahme der engen Klassierung in 1 µm-Schritten für die Lagerschalen 16 und 18 zeigt sich in Figur 6 das statistisch relevante Maximum, dargestellt durch einen Balken, in einem äußerst engen Lagerspielschwankungsbereich zwischen 25 und 27 µm. Diese Werte sind jeweils um die Meßunsicherheit bzw. den Sicherheitsabstand 48 von 8 µm von der Kleinstspielgrenze 44 mit 17 µm bzw. der Größtspielgrenze 46 von 35 um beabstandet. Bedingt durch die gröbere Klassierung in 4 µm-Schritten stellt sich gemäß Figur 7 eine Lagerspielschwankung in statistisch relevanter Weise zwischen 25 µm und 33 µm ein, wobei jeweils am unteren bzw. am oberen Ende der Sicherheitsabstand 48 von 8 µm angetragen ist.

Figur 8 zeigt für den Fall des unklassierten Kurbelgehäuses 12 und einer Lagerschalenklassierung in 1 µm-Schritten einen statistisch relevanten Bereich zwischen 32 und 34 µm für das Lagerspiel S. Durch den Entfall der Vermessung des Kurbelgehäuses 12 summieren sich die Meßunsicherheiten als Effektivwerte von Kurbelwelle und beiden Lagerschalenhälften 16, 18 zu insgesamt 5 µm, während die Bauteiltoleranz 56 für das Kurbelgehäuse 12 mit 10 µm Breite als Sicherheitsabstand von der Kleinstspielgrenze 44 (17 µm) angetragen ist. Für den unklassierten Fall würde sich als zulässiges Größtspiel 50 wiederum 57 µm einstellen.

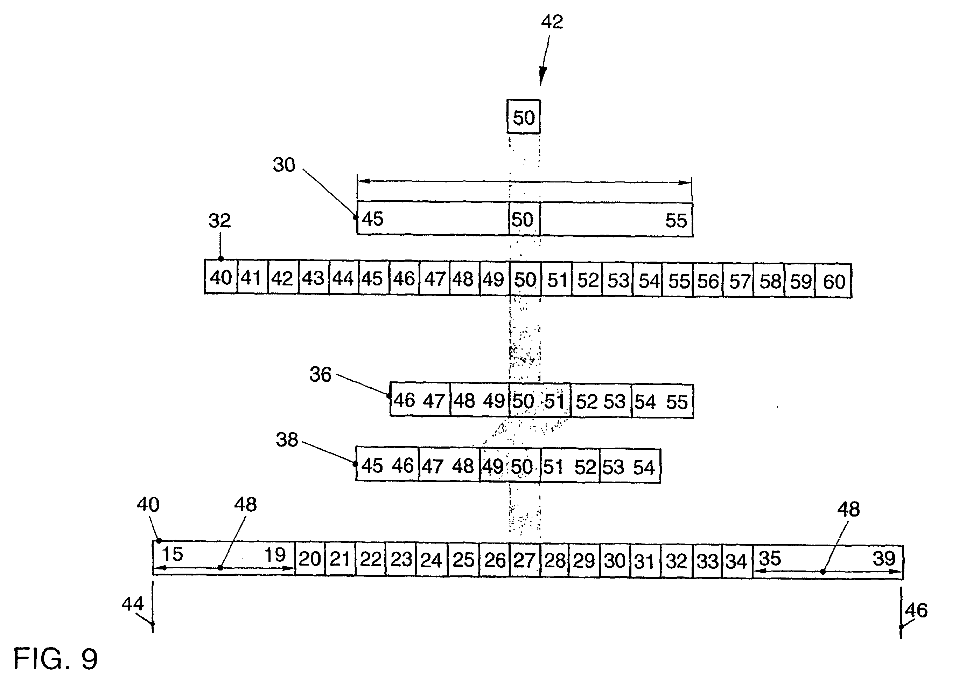

Figur 9 zeigt beispielhaft eine dritte Ausführungsform einer Bauteilklassierung in Toleranzbändern 30, 32, 36 und 38. Hier erfolgt die Klassierung der Gleitlager-Halbschalen 16 und 18 in den Toleranzbändern 36 und 38 in 2 µm-Schritten und es erfolgt keine Klassierung des Lagergehäuses 12. Dies verringert in vorteilhafter Weise den Aufwand der Einzelmessungen sowie der Sortierung der Gleitlager-Halbschalen 16, 18 und bleibt im Ergebnis der Streuung des Lagerspiels S in vertretbaren Bereichen. Im Vergleich zu Figur 3 werden die Auswirkungen der Klassierung der Gleitlager-Halbschalen 16 und 18 in 2 µm breiten Schritten deutlich. Während gemäß Figur 3 das Lagerspiel S lediglich in den insgesamt elf 1 µm Schritten von 20 µm bis 30 um liegen kann, stellt sich gemäß Figur 9 ein insgesamt 15 µm breiter Bereich zwischen 20 µm und 34 µm ein. In vorteilhafter Ausgestaltung sind die Toleranzbänder 36 und 38 jeweils um 1 µm zueinander versetzt angeordnet, wodurch eine weitere Einschränkung des möglichen Lagerspieles S erzielt wird.

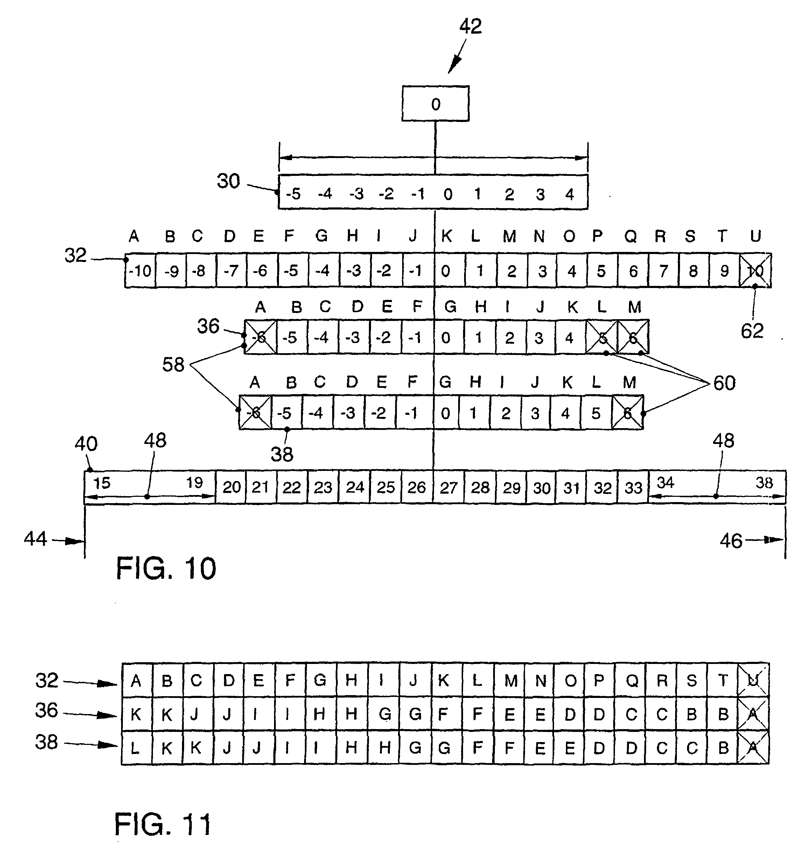

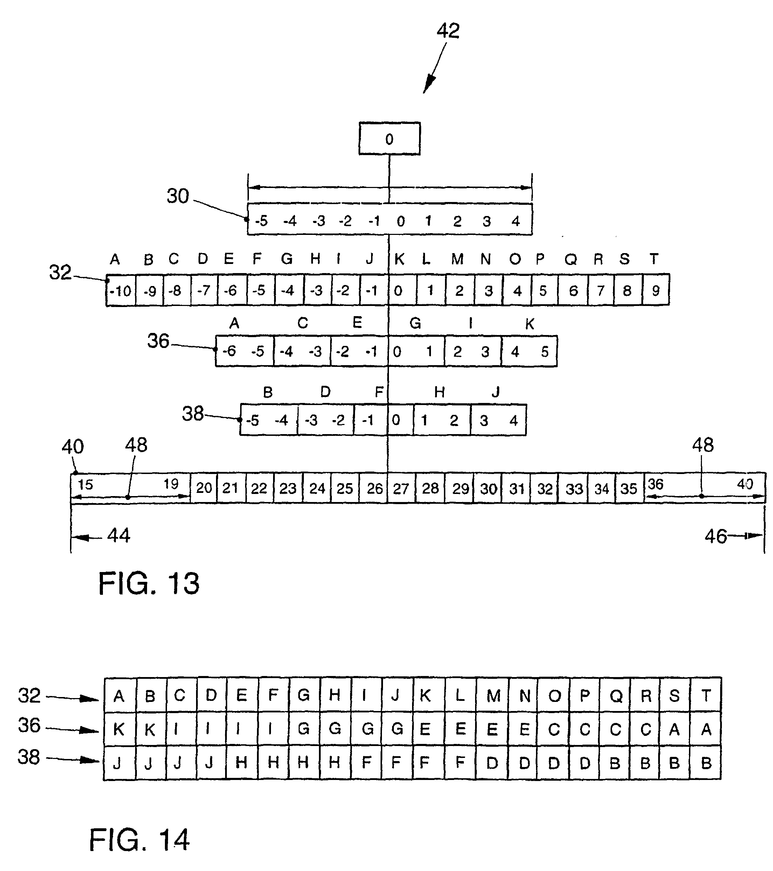

Figuren 10 und 13 zeigen Toleranzbänder für eine Klassierung, wobei in den Toleranzbändern 30, 32, 36 und 38 direkt die Differenz zum Sollmaß in um angegeben ist. Unter der Annahme einer insgesamt 10 µm breiten Streuung innerhalb des Toleranzbandes 30 wurde hier die Toleranzmitte 42 beispielhaft zwischen den Wert 0 und -1 gelegt, wodurch sich jeweils nach links bzw. rechts gleiche Abstände ergeben. Das Toleranzband 30 hätte ebenso auf einen Wertbereich -4 bis +5 gelegt werden können. Um in Folge dessen das Arbeiten mit 0,5 µm Schritten innerhalb der Toleranzbänder 32, 36 und 38 zu vermeiden, wurden diese bzgl. der Toleranzmitte 42 so verschoben, daß diese zwischen den Werten 0 und -1 verläuft. Hierdurch ergeben sich im Toleranzband 32 nach links insgesamt 10 Klassen A bis J, während sich nach rechts 10 Klassen von K bis T ergeben. Die Toleranzlage U wurde hier auf Grund der angestrebten, jeweils 10 µm breiten Lage beidseitig der Toleranzmitte 42 gestrichen. Der Verzicht auf diese eine Toleranzlage in dem mit 62 bezeichneten Bereich hat vorteilhafter Weise zur Folge, daß in den Toleranzbändern 36 und 38 auf die Bevorratung von Lagerschalen im Bereich 58 verzichtet werden kann. Analog hierzu stellt sich in den Toleranzbändern 36 und 38 der Verzicht auf die Klassen M im Bereich 60 ein. In Zusammenschau mit Figur 11 wird deutlich, daß im Toleranzband 36 auch auf die Klasse L verzichtet werden kann, was die zu bevorratende und zu handhabende Anzahl von Lagerschalen weiter reduziert. Figuren 11 und 14 zeigen Zuordnungstabellen, wobei in der ersten Zeile die Welle aus dem Toleranzband 32 angegeben ist (A, B, C...) und in der zweiten und dritten Zeile die der jeweiligen Welle zuzuordnenden Gleitlager-Halbschalen 16, 18 für oben und unten. Hier ergeben sich die entsprechenden Bezeichnungen A, B, C... aus den Toleranzbändern 36 und 38. Im Ergebnis stellt sich in Figur 10 folgendes ein. Unter Zugrundelegung einer Kleinstspielgrenze 44 von 15 µm und einer Größtspielgrenze 46 von 38 µm liegt die statistische Toleranzmitte 42 zwischen 26 µm und 27 µm. Durch das unklassierte Lagergehäuse im Toleranzband 30 kann sich das Lagerspiel S von dieser Toleranzmitte 42 aus betrachtet innerhalb der fünf Schritte 27 µm bis 31 µm bzw. 26 µm und 22 µm einstellen, die Kompensation der Abweichungen der Welle durch die Halblagerschalen 16, 18 bringt jeweils rechts bzw. links eine weitere Unsicherheit von 2 µm, d. h. zwischen 32 µm und 33 µm bzw. zwischen 21 µm und 20 µm.

In Figur 13 sind die Lagerschalen 16, 18, ähnlich wie bereits im Zusammenhang mit Figur 9 erläutert, in Klassen A, B, ...K zu jeweils 2 µm Breite gruppiert. Die Toleranzbänder 36 und 38 sind hierbei so gegeneinander verschoben, daß das Toleranzband 36 für die obere Gleitlager-Halbschale 16 insgesamt 6 Klassen umfaßt, während das Toleranzband 38 für die untere Gleitlager-Halbschale 18 lediglich 5 umfaßt, so daß insgesamt elf Lagerschalen zu bevorraten sind.

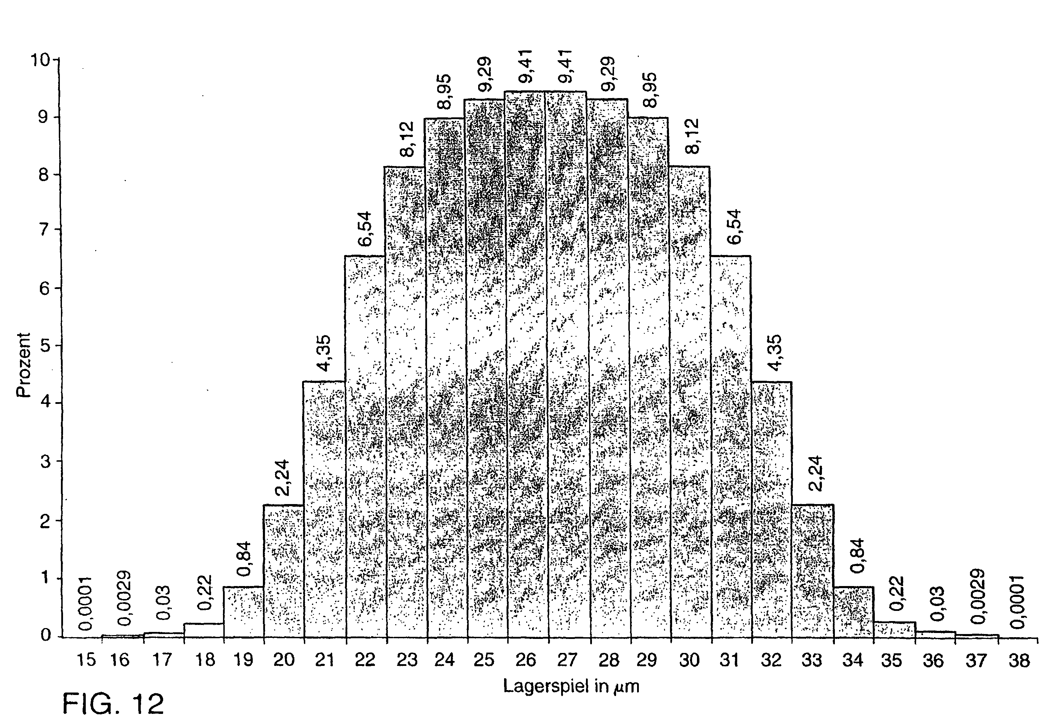

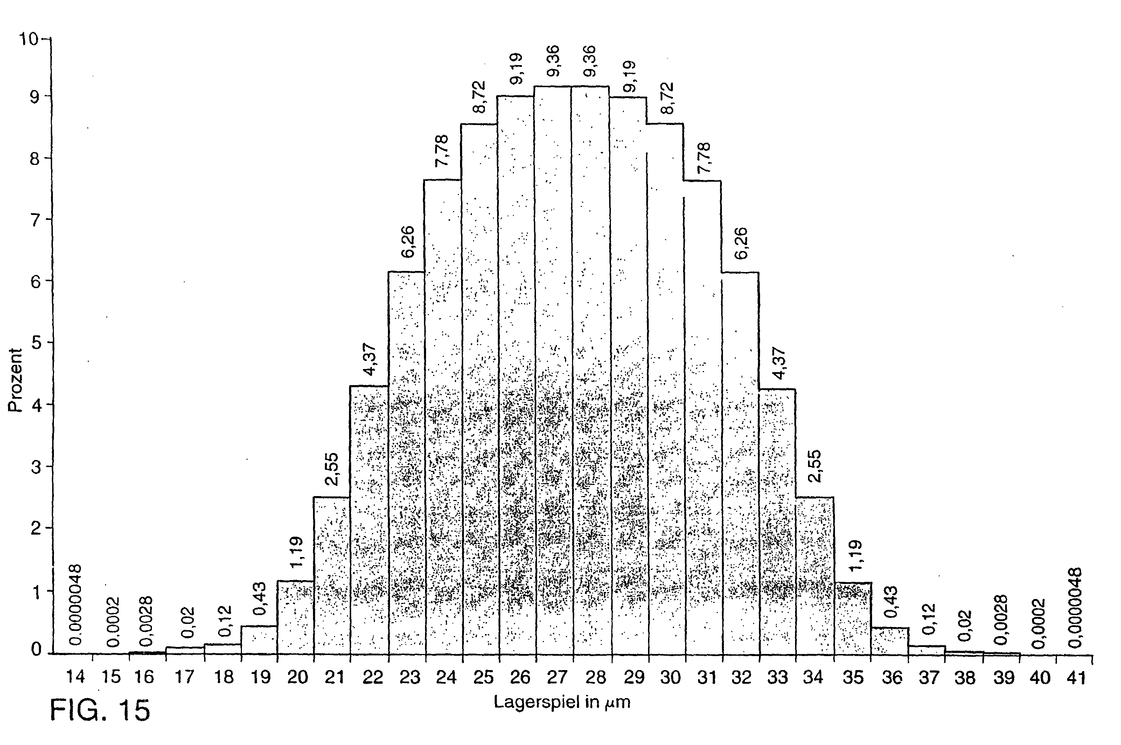

Die Figuren 12 und 15 zeigen den Klassierungen der Figuren 10 und 13 entsprechende Häufigkeitsverteilungen des Lagerspiels S. Wie sich hieraus ergibt, ist der Genauigkeitsverlust von der 1 µm-Schritt Klassierung der Gleitlager-Halbschalen 16, 18 (Fig. 12) zur 2 µm Klassierung (Fig. 15) nicht gravierend, so daß die entsprechenden Kosten- und Aufwandsersparnisse der letzteren Klassierung ausgenutzt werden können.

Zur vollständigen Ausschöpfung des durch das erfindungsgemäße Verfahren bereitgestellten Potentials ist es bevorzugt vorgesehen, daß jedes Lager individuell vermessen und den vorgeschlagenen Zuordnungsvorschriften unterzogen wird. Dies bedeutet bei einer Kurbelwelle einer Hubkolben-Brennkraftmaschine, daß sämtliche Hauptlager der Kurbelwelle individuell vermessen werden, bei einem klassierten Kurbelgehäuse weiterhin, daß jeder Hauptlagerstuhl individuell vermessen wird.

## Patentansprüche

1. Verfahren zur Montage eines Gleitlagers, mit einem Lagergehäuse mit wenigstens einer Lagerbohrung (26) und einer Welle, welche in einer geteilten Gleitlagerschale mit Gleitlager-Halbschalen (16, 18) in der Lagerbohrung gelagert ist,
**gekennzeichnet durch** folgende Schritte
(a) Festlegen einer zulässigen, nicht zu unterschreitenden Kleinstspielgrenze (44), einer zulässigen, nicht zu überschreitenden Größtspielgrenze (46) sowie Festlegen eines Wertes für die Meßunsicherheit der Einzelmessungen,
(b) Bestimmen der Istmaße von vorgefertigten Wellen und Gleitlagerschalen (16, 18),
(c) Bestimmen der sich bei Paarung der Lagerbohrung (26) mit der Welle einstellenden Abweichung von einem sich statistisch einstellenden und **durch** die Kleinstspielgrenze (44) und Größtspielgrenze (46) bestimmten mittleren Lagerspieles,
(d) Kompensieren von im wesentlichen der halben bestimmten Abweichung **durch** Zuordnung einer aus dem Schritt (b) vorgehaltenen Gleitlager-Halbschale (16, 18), wobei die Kompensation derart erfolgt, daß sich das einstellende Lagerspiel (S) in einem Wertebereich bewegt, welcher um mindestens den Wert einer Meßunsicherheit oberhalb der Kleinstspielgrenze (44) und unterhalb der Größtspielgrenze (46) liegt,
(e) Kompensieren der verbliebenen Abweichung **durch** Zuordnung einer weiteren aus dem Schritt (b) vorgehaltenen Gleitlager-Halbschale (18, 16), wobei die Kompensation derart erfolgt, daß sich das einstellende Lagerspiel (S) in einem Wertebereich bewegt, welcher um mindestens den Wert einer Meßunsicherheit oberhalb der Kleinstspielgrenze (44) und unterhalb der Größtspielgrenze (46) liegt.

2. Verfahren nach Anspruch 1,
**dadurch gekennzeichnet, daß**
im Schritt (b) zusätzlich das Istmaß der Lagerbohrung (26) bestimmt wird.

3. Verfahren nach Anspruch 1 oder 2,
**dadurch gekennzeichnet, daß**
bei einem Lagergehäuse mit mehreren Lagerbohrungen (26) im Schritt (b) das Istmaß an den den individuellen Lagerbohrungen zugeordneten Abschnitten der Wellen bestimmt wird.

4. Verfahren nach einem der vorhergehenden Ansprüche,
**dadurch gekennzeichnet, daß**
die Werkstücke entsprechend ihrer lstmaße gekennzeichnet werden.

5. Verfahren nach einem oder mehreren der vorhergehenden Ansprüche,
**dadurch gekennzeichnet, daß**
in Schritt (b) das Bestimmen der Istmaße auf 1 µm bis 4 µm genau, vorzugsweise 1 µm bis 2 µm, insbesondere 1 µm genau erfolgt.

6. Verfahren nach einem oder mehreren der vorhergehenden Ansprüche,
**dadurch gekennzeichnet, daß**
die Kleinstspielgrenze (44) einen Wert zwischen 10 µm und 20 µm aufweist, vorzugsweise zwischen 13 µm und 17 µm, insbesondere 15 µm.

7. Verfahren nach einem oder mehreren der vorhergehenden Ansprüche,
**dadurch gekennzeichnet, daß**
die Größtspielgrenze (46) einen Wert zwischen 33 µm und 41 µm aufweist, vorzugsweise zwischen 33 µm und 35 µm, insbesondere 33 µm.

8. Verfahren nach einem oder mehreren der vorhergehenden Ansprüche,
**dadurch gekennzeichnet, daß**
die im Schritt (b) bestimmten Gleitlagerschalen (16, 18) entsprechend ihrer Istmaße in Spielklassen von Toleranzbändern (36 bzw. 38) eingeordnet werden und diese beiden Toleranzbänder (36, 38) bei Zuordnung der Lagerschalen (16, 18) in 2 µm breite Klassen jeweils um 1 µm versetzt zueinander zu einer Toleranzmitte (42) angeordnet sind.

9. Verfahren nach einem der vorhergehenden Ansprüche,
**dadurch gekennzeichnet, daß**
das Lagergehäuse ein Kurbelgehäuse (12) ist.

10. Verfahren nach einem der vorhergehenden Ansprüche,
**dadurch gekennzeichnet, daß**
die Welle eine Kurbelwelle ist.

11. Verfahren nach einem der vorhergehenden Ansprüche,
**dadurch gekennzeichnet, daß**
die Zuordnung von Schritt (d) und (e) zusätzlich gemäß eines Durchmessers (D) der Lagerbohrung (26) erfolgt.

12. Verwendung eines nach dem Verfahren der vorhergehenden Ansprüche hergestellten Gleitlagers in einer Hubkolben-Brennkraftmaschine, insbesondere in Kraftfahrzeugen.

## Claims

1. Method for mounting a sliding-contact bearing, with a bearing casing with at least one bearing through-hole (26) and a shaft, which is mounted in the bearing through-hole in a divided sliding-contact bearing shell with sliding-contact bearing half-shells (16, 18), **characterized by** the following steps
(a) fixing a permissible, not to be undershot, minimum clearance limit (44), a permissible, not to be overshot, maximum clearance limit (46), and fixing a value for the measuring uncertainty of the individual measurements,
(b) determining the actual dimensions of prefabricated shafts and sliding-contact bearing shells (16, 18),
(c) determining the deviation resulting from the pairing of the bearing through-hole (26) with the shaft from a statistically set average bearing clearance determined by the minimum clearance limit (44) and maximum clearance limit (46),
(d) compensating for substantially half the determined deviation by assigning a sliding-contact bearing half-shell (16, 18) provided by the step (b), the compensation taking place by the resulting bearing clearance (S) moving in a range of values which lies around at least the value of a measuring uncertainty above the minimum clearance limit (44) and below the maximum clearance limit (46),
(e) compensating for the remaining deviation by assigning a further sliding-contact bearing half-shell (18, 16) provided by the step (b), the compensation taking place by the resulting bearing clearance (S) moving in a range of values which lies around at least the value of a measuring uncertainty above the minimum clearance limit (44) and below the maximum clearance limit (46).

2. Method according to Claim 1, **characterized in that**, in step (b), the actual dimension of the bearing through-hole (26) is additionally determined.

3. Method according to Claim 1 or 2, **characterized in that**, in the case of a bearing casing with a plurality of bearing through-holes (26), in step (b) the actual dimension is determined at portions of the shafts assigned to the individual bearing through-holes.

4. Method according to one of the preceding claims, **characterized in that** the workpieces are marked in a way corresponding to their actual dimensions.

5. Method according to one or more of the preceding claims, **characterized in that**, in step (b), the determination of the actual dimensions takes place with an accuracy to within 1 µm to 4 µm, preferably 1 µm to 2 µm, in particular 1 µm.

6. Method according to one or more of the preceding claims, **characterized in that** the minimum clearance limit (44) has a value between 10 µm and 20 µm, preferably between 13 µm and 17 µm, in particular 15 µm.

7. Method according to one or more of the preceding claims, **characterized in that** the maximum clearance limit (46) has a value between 33 µm and 41 µm, preferably between 33 µm and 35 µm, in particular 33 µm.

8. Method according to one or more of the preceding claims, **characterized in that** the actual dimensions corresponding to sliding-contact bearing shells (16, 18) determined in step (b) are classified in clearance classes of tolerance bands (36 and 38, respectively) and, with assignment of the bearing shells (16, 18) in classes of 2 µm increments, these two tolerance bands (36, 38) are arranged offset by 1 µm respectively from each other in relation to a mid-tolerance (42).

9. Method according to one of the preceding claims, **characterized in that** the bearing casing is a crankcase (12).

10. Method according to one of the preceding claims, **characterized in that** the shaft is a crankshaft.

11. Method according to one of the preceding claims, **characterized in that** the assignment of steps (d) and (e) additionally takes place according to a diameter (D) of the bearing through-hole (26).

12. Use of a sliding-contact bearing produced by the method of the preceding claims in a reciprocating-piston internal combustion engine, in particular in motor vehicles.

## Revendications

1. Procédé de montage d'un palier à glissement, comprenant un logement de palier avec au moins un alésage de palier (26) et un arbre, lequel est monté dans une coquille de coussinet lisse divisée comprenant des demi-coquilles (16, 18) de coussinet lisse dans l'alésage de palier,
**caractérisé par** les étapes suivantes
(a) établissement d'une limite de jeu la plus petite possible (44) admise, ne devant pas être dépassée vers le bas, d'une limite de jeu la plus grande possible (46) admise, ne devant pas être dépassée, ainsi qu'établissement d'une valeur pour l'incertitude de mesure des mesures individuelles,
(b) détermination des mesures réelles d'arbres préfabriqués et de coquilles de coussinet lisse (16, 18),
(c) détermination de la déviation, s'ajustant lors de l'appariement de l'alésage de palier (26) avec l'arbre, d'un jeu de palier moyen s'ajustant statistiquement et déterminé par la limite de jeu la plus petite possible (44) et la limite de jeu la plus grande possible (46),
(d) compensation essentiellement de la moitié de la déviation déterminée par affectation d'une demi-coquille (16, 18) de coussinet lisse dérivée de l'étape (b), la compensation s'effectuant de telle sorte que le jeu de palier (S) s'ajustant se déplace dans une plage de valeurs qui se trouve à environ au moins la valeur d'une incertitude de mesure au-dessus de la limite de jeu la plus petite possible (44) et en dessous de la limite de jeu la plus grande possible (46),
(e) compensation de la déviation restante par affectation d'une autre demi-coquille (18, 16) de coussinet lisse dérivée de l'étape (b), la compensation s'effectuant de telle sorte que le jeu de palier (S) s'ajustant se déplace dans une plage de valeurs qui se trouve à environ au moins la valeur d'une incertitude de mesure au-dessus de la limite de jeu la plus petite possible (44) et en dessous de la limite de jeu la plus grande possible (46).

2. Procédé selon la revendication 1, **caractérisé en ce que** dans l'étape (b) on détermine en outre la mesure réelle de l'alésage de palier (26).

3. Procédé selon la revendication 1 ou 2, **caractérisé en ce que** dans un logement de palier comprenant plusieurs alésages de palier (26) dans l'étape (b) la mesure réelle est déterminée sur les portions des arbres associées aux alésages de palier individuels.

4. Procédé selon l'une quelconque des revendications précédentes, **caractérisé en ce que** les pièces sont caractérisées en fonction de leur mesure réelle.

5. Procédé selon l'une quelconque ou plusieurs des revendications précédentes, **caractérisé en ce que** dans l'étape (b) la détermination de la mesure réelle s'effectue à une précision de 1 µm à 4 µm, de préférence de 1 µm à 2 µm, en particulier de 1 µm.

6. Procédé selon l'une quelconque ou plusieurs des revendications précédentes, **caractérisé en ce que** la limite de jeu la plus petite possible (44) présente une valeur comprise entre 10 µm et 20 µm, de préférence entre 13 µm et 17 µm, en particulier de 15 µm.

7. Procédé selon l'une quelconque ou plusieurs des revendications précédentes, **caractérisé en ce que** la limite de jeu la plus grande possible (46) présente une valeur comprise entre 33 µm et 41 µm, de préférence entre 33 µm et 35 µm, en particulier de 33 µm.

8. Procédé selon l'une quelconque ou plusieurs des revendications précédentes, **caractérisé en ce que** les coquilles (16, 18) de coussinet lisse déterminées dans l'étape (b) sont classées en fonction de leur mesure réelle dans des classes de jeu de bandes de tolérances (36 ou 38) et ces deux bandes de tolérances (36, 38) lors de l'affectation des coquilles de coussinet (16, 18) sont disposées, par rapport à un centre de tolérance (42), dans des classes de 2 µm de large à chaque fois avec un décalage de 1 µm l'une par rapport à l'autre.

9. Procédé selon l'une quelconque des revendications précédentes, **caractérisé en ce que** le logement de palier est une boîte de manivelle (12).

10. Procédé selon l'une quelconque des revendications précédentes, **caractérisé en ce que** l'arbre est un arbre à manivelle.

11. Procédé selon l'une quelconque des revendications précédentes, **caractérisé en ce que** l'affectation de l'étape (d) et de l'étape (e) s'effectue de plus selon un diamètre (D) de l'alésage du palier (26).

12. Utilisation d'un palier à glissement fabriqué selon le procédé des revendications précédentes dans un moteur à combustion interne à piston alternatif, en particulier dans des véhicules automobiles.
